# EUROPEAN PATENT APPLICATION

(11) **EP 3 315 833 A1**
(43) Date of publication of application: **02.05.2018**
(21) Application number: 17199087.2
(22) Date of filing: 30.10.2017
(51) Int. Cl.: F16J 15/34, F16J 15/00, F16J 15/3228, F04D 29/12

(54) **SHAFT SEAL DEVICE OF REFRIGERATOR COMPRESSOR**

(30) Priority: 31.10.2016 JP 2016213464
(71) Applicant: Eagle Industry Co., Ltd., Minato-ku Tokyo 105-8587 (JP)
(72) Inventor: NAKAHARA, Nobuo, TOKYO, 105-8587 (JP)
(74) Representative: WSL Patentanwälte Partnerschaft mbB

(57) **Abstract**

{Technical Problem} To provide a shaft seal device of a refrigerator compressor which is superior in durability.

{Solution to Problem} A shaft seal device (10) of a refrigerator compressor which compresses a refrigerant, includes: a housing (1) into which a rotating shaft (2) of the refrigerator compressor is inserted; a mechanical seal (3) having a stationary sealing ring (40) which is held by the housing (1), and a rotating sealing ring (30) which is mounted to the rotating shaft (2) and whose sliding surface (30a) slidably contacts a sliding surface (40a) of the stationary sealing ring (40); an auxiliary seal (90) which seals the rotating shaft (2); and a refrigerator oil (L) which is stored to a height that reaches at least a part of the sliding surface (40a) in an intermediate chamber (C) which is formed between the mechanical seal (3) and the auxiliary seal (90).

## Description

### {TECHNICAL FIELD}

The present invention relates to a shaft seal device of a refrigerator compressor which seals a rotating shaft of a compressor that compresses a refrigerant in a refrigeration cycle device.

### {BACKGROUND ART}

In a refrigerator compressor which seals a compressor that compresses a refrigerant in a refrigeration cycle device such as an automotive air conditioner, a shaft seal device is used to seal a refrigerant. Conventionally, as a shaft seal device, a small and light lip seal has been used. In the meantime, as a refrigerant, chlorofluorocarbon has been conventionally used, but warming due to depletion of the ozone layer and infrared absorption became a problem, and carbon dioxide (CO₂) began to be used. In a case where carbon dioxide is used as a refrigerant, compression pressure of the refrigerant rises considerably compared to the case where chlorofluorocarbon is used. Therefore, it is proposed that a mechanical seal which is superior in sealing performance than a lip seal as a shaft seal device is used (See Patent Citation 1). The mechanical seal forms a lubricating film between sliding surfaces, and thereby capable of achieving superior durability.

### {CITATION LIST}

### {Patent Literature}

Patent Citation 1: Japanese Laid-open Patent Publication 2007-9886 ([0044]-[0049], FIG. 1)

### {SUMMARY OF INVENTION}

### {Technical Problem}

Here, in the refrigerator compressor, refrigerator oil within the inside thereof decreases, and no lubricating film is formed between the sliding surfaces of the mechanical seal, which results in so-called poor lubrication, and durability may be lost. For example, in a case where a liquid-phase refrigerant accumulates in a housing during long-time stoppage and the like of the refrigerator compressor and the refrigerator oil having compatibility with the liquid-phase refrigerant is diluted, or in a case where the refrigerator compressor is used under a high load condition, poor lubrication may occur. Then, if poor lubrication occurs, a lubricating film is not sufficiently formed between the sliding surfaces of the mechanical seal, and the sliding surfaces of the mechanical seal are in the solid lubrication state, which might result in an abnormal rise of friction coefficient or generation of a stick slip phenomenon.

The present invention has been made focusing on such problems, and it is an object thereof to provide a shaft seal device of a refrigerator compressor which is superior in durability.

### {Solution to Problem}

In order to solve the problems, a shaft seal device of a refrigerator compressor according to a first aspect of the present invention is a shaft seal device of a refrigerator compressor which compresses a refrigerant, including: a housing into which a rotating shaft of the refrigerator compressor is inserted; a mechanical seal having a stationary sealing ring which is held by the housing, and a rotating sealing ring which is mounted to the rotating shaft and whose sliding surface slidably contacts a sliding surface of the stationary sealing ring; an auxiliary seal which seals the rotating shaft; and a refrigerator oil which is stored to a height that reaches at least a part of the sliding surface in an intermediate chamber which is formed between the mechanical seal and the auxiliary seal.

According to the first aspect, in the intermediate chamber, the refrigerator oil is stored to a height that reaches at least a part of the sliding surface and a gap between the sliding surfaces is small, and after stoppage of the refrigerator compressor, the refrigerator oil is guided between the sliding surfaces by a capillary action, and therefore it can be ensured that a lubricating film is interposed between the sliding surfaces. In particular, during start-up of the refrigerator compressor, even in a situation where the refrigerator oil between the sliding surfaces is decreased and poor lubrication tends to occur, the refrigerator oil is supplied to at least a part of the gap between the sliding surfaces, and the refrigerator oil may be supplied to the entire gap between the sliding surfaces along with rotation of the rotating sealing ring. Thus, the mechanical seal can maintain fluid lubrication and is superior in durability.

In a second aspect of the present invention, the refrigerator oil is stored so as to leave a space on the upper side in the intermediate chamber.

According to the second aspect, even if the refrigerator oil in the intermediate chamber expands due to temperature, pressure of the intermediate chamber does not excessively rise, and differential pressure between the intermediate chamber of the mechanical seal and the inside of the refrigerator compressor is not largely fluctuated, and thereby capable of successfully sealing by the mechanical seal.

In a third aspect of the present invention, the auxiliary seal is formed of a material allowing the refrigerant to permeate therethrough.

According to the third aspect, the auxiliary seal can be permeated by the refrigerant which is leaked to the intermediate chamber through the gap between the sliding surfaces of the mechanical seal to the outside of the refrigerator compressor while sealing the refrigerator oil. Therefore, pressure of the intermediate chamber does not excessively rise, and differential pressure of the intermediate chamber of the mechanical seal and the inside of the refrigerator compressor is not largely fluctuated, and thereby capable of successfully sealing by the mechanical seal.

In a fourth aspect of the present invention, the auxiliary seal is a lip seal.

According to the fourth aspect, miniaturization is possible because the auxiliary seal is the lip seal.

In a fifth aspect of the present invention, the lip seal is arranged on the outside of the refrigerator compressor than the mechanical seal.

According to the fifth aspect, since the mechanical seal is arranged on the inside of the refrigerator compressor, shaft seal of the refrigerant of high pressure is ensured. Moreover, since the intermediate chamber extends to the outside of the regrigerator compressor, the refrigerator oil in the intermediate chamber is cooled from the outside of the refrigerator compressor and contributes to the cooling of the rotating sealing ring and the stationary sealing ring.

In a sixth aspect of the present invention, the mechanical seal is an inside mechanical seal, and the intermediate chamber is defined by an inner circumferential surface of the mechanical seal and an outer circumferential surface of the rotating shaft.

According to the sixth aspect, the number of members on the rotating side in contact with the refrigerator oil is small, and rotating torque of the rotating shaft is less affected.

In a seventh aspect of the present invention, the refrigerant is carbon dioxide.

According to the seventh aspect, since the mechanical seal is used, shaft seal of carbon dioxide of high pressure is ensured.

In an eighth aspect, the sliding surface of the rotating sealing ring and the sliding surface of the stationary sealing ring have an arithmetic mean roughness Ra of 0.2µm or less.

According to the eighth aspect, the gap between the sliding surfaces is small and the capillary action is ensured to occur.

### {BRIEF DESCRIPTION OF DRAWINGS}

FIG. 1 is a cross-sectional view showing the whole of a shaft seal device of a refrigerator compressor in a first embodiment of the present invention.
FIG. 2 is a perspective view of a case of FIG. 1.
FIG. 3 is a cross-sectional view along line III-III in FIG. 1.
FIG. 4 is a view for explaining a concept that a refrigerator oil is guided to sliding surfaces.
FIG. 5 is a cross-sectional view showing a modification of the first embodiment.
FIG. 6 is a cross-sectional view showing the whole of a shaft seal device of a refrigerator compressor in a second embodiment of the present invention.

### {DESCRIPTION OF EMBODIMENTS}

Modes for implementing a shaft seal device of a refrigerator compressor according to the present invention will be described below based on embodiments. In addition, the present invention shall not be interpreted as being limited thereto, and a variety of changes, modifications, or improvements could be added based on the knowledge of a person skilled in the art without departing from the scope of the present invention.

### {First embodiment}

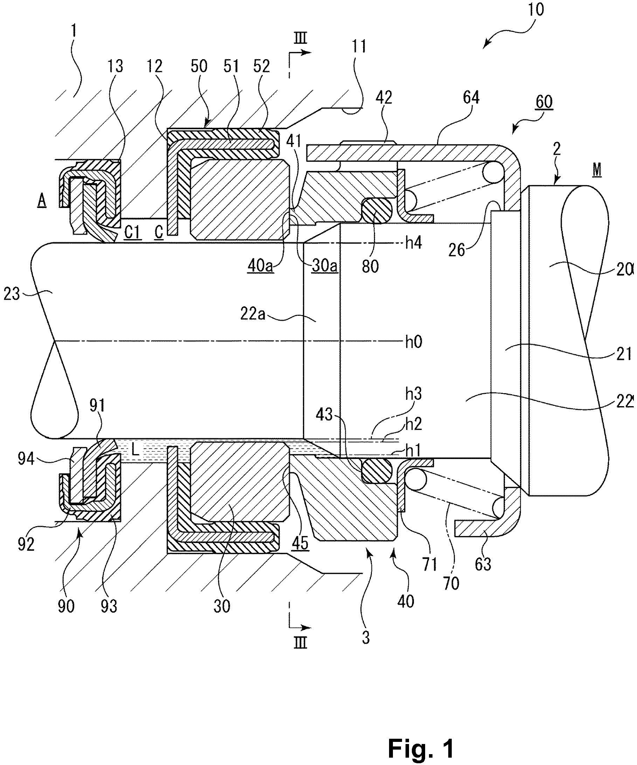

As shown in FIG. 1, a shaft seal device 10 of a refrigerator compressor is composed of a mechanical seal 3 and a lip seal 90 (an auxiliary seal), and the refrigerator compressor is installed transversely in such a manner that a rotating shaft 2 is arranged in a horizontal direction. The mechanical seal 3 and the lip seal 90 are respectively mounted between a housing 1 of the refrigerator compressor and the rotating shaft 2 which is arranged so as to communicate with the inside and the outside of the refrigerator compressor by passing through a shaft hole 11 of the housing 1. On the inside M of the compressor than the mechanical seal 3, carbon dioxide (CO₂) as a gaseous refrigerant which is a sealed fluid and PAG (polyalkylene glycol) as a refrigerator oil are sealed. A first embodiment has a configuration in which a refrigerator oil L is stored also in an intermediate chamber C between the mechanical seal 3 and the lip seal 90. It should be noted that, although the refrigerator oil L in the intermediate chamber C is the same PAG as the refrigerator oil on the inside M of the compressor, it is not necessarily limited to PAG.

The mechanical seal 3 is mounted between the housing 1 and the rotating shaft 2. To the rotating shaft 2, a driving force from a crank shaft of an engine (not shown) is transmitted via a mechanism such as an electromagnetic clutch on the atmosphere A side, thereby the rotating shaft 2 is rotated to drive a mechanism in the inside of the refrigerator compressor.

The mechanical seal 3 has a mating ring 30 being a stationary sealing ring which is mounted to the housing 1 in a non-rotating state, and a seal ring 40 being a rotating sealing ring which is mounted to the rotating shaft 2 and rotates integrally with the rotating shaft 2. Moreover, the mechanical seal 3 has a case 60, a spring 70, a spring holder 71, and an O-ring 80 as a configuration for fitting the seal ring 40 to the rotating shaft 2.

The mating ring 30 and the seal ring 40 are arranged so as to face each other along an axial direction of the rotating shaft 2, and sliding surfaces 30a, 40a which are the faced end faces thereof are closely contacted, thereby sealing the refrigerant. That is, the refrigerant on the inside M of the compressor is sealed so as not to leak and flow out to the atmosphere side A.

As shown in FIG. 1, a space on the outer circumferential side of the sliding surfaces 30a, 40a on the right side of the housing 1 is a space on the inside M of the compressor where the gaseous refrigerant is filled, and a space leading to the left side of the housing 1 from the inner circumferential side of the sliding surfaces 30a, 40a is a space on the atmosphere side A (the outside of the compressor). The mechanical seal 3 of the first embodiment is an inside mechanical seal which prevents leakage of the refrigerant being the sealed fluid from the outer circumferential side to the inner circumferential side.

The end face, on a side of the seal ring 40, of the mating ring 30 is formed as the sliding surface 30a. The sliding surface 40a is formed, on a side of the mating ring 30,to an annular sliding protrusion 41 of the seal ring 40. Moreover, the sliding surface 30a and the sliding surface 40a are formed to have a center line average roughness Ra of 0.2mm or less, preferably 0.1mm or less, by mirror finishing.

The seal ring 40 is formed of, for example, carbon sliding material, and the mating ring 30 is formed of hard sliding material (for example, ceramics such as SiC) having a Young's modulus higher than that of carbon sliding material.

The O-ring 80 is received in an O-ring mounting recess 43 which is formed in the inner circumferential surface of the end part on the back surface side (the surface on the opposite side to the mating ring 30) of the seal ring 40. On the back surface of the seal ring 40, the spring holder 71 which is a metal plate is arranged in an abutting manner, and an inner diameter portion thereof extends so as to block the back of the O-ring mounting recess 43 of the seal ring 40. On the back surface side of the spring holder 71, the case 60 made of a tripod-shaped metal plate (for example, stainless steel plate) is arranged.

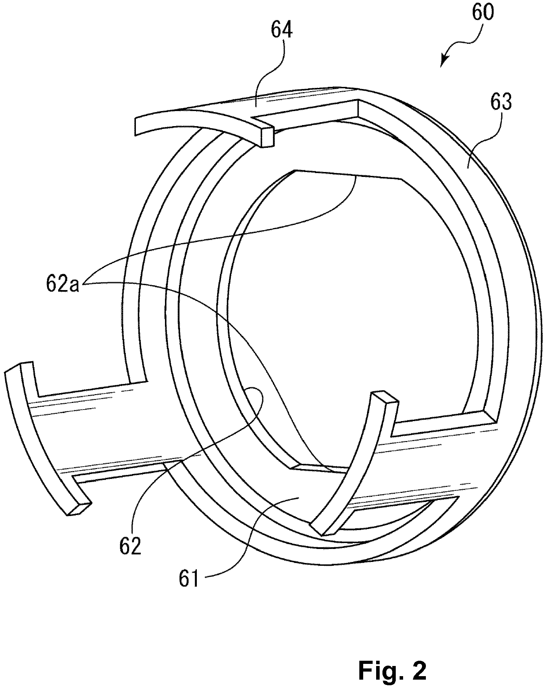

With reference to FIG. 2, the case 60 is formed by a flange-shaped bottom plate 61 having a mating hole 62 in the center, a rib 63 slightly extending in the axial direction from the bottom plate 61, and three guiding pieces 64 (guiding members) extending in the axial direction from the rib 63. The guiding pieces 64 are formed at equal intervals in a circumferential direction, and engage with notches 42 (FIG. 1) which are formed similarly at equal intervals in the outer circumferential surface of the seal ring 40. Thereby, the seal ring 40 becomes in a state movable in the axial direction of the rotating shaft 2 and in a state immovable in the circumferential direction (the rotating direction).

The mating ring 30 is fitted into an annular recess 12 which is formed in expanded diameter in an opening, on the inside M of the compressor, of the shaft hole 11 of the housing 1 while interposing a gasket 50 therebetween. A metal ring 51 in the inside of the gasket 50 is covered with a rubber member 52 by insert molding.

As shown in FIG. 1, the rotating shaft 2 is formed with a large diameter portion 20, a first step 21, a second step 22, and a small diameter portion 23 from the inside M of the compressor. An outer surface (a right surface) of the bottom plate 61 abuts a radially extending surface of the first step 21 of the rotating shaft 2, thereby the case 60 is locked in the axial direction of the rotating shaft 2. Moreover, the case 60 is configured such that flat parts 62a of the mating hole 62 engage with notches 26 formed in a part of the first step 21 of the rotating shaft 2 (FIG. 1). Thereby, the case 60 is mated with the rotating shaft 2 so as to rotate immovably in the circumferential direction with respect to the rotating shaft 2, that is, integrally with the rotating shaft 2 along with rotation of the rotating shaft 2.

The second step 22 has a smaller diameter than that of the first step 21, and the seal ring 40 is attached thereto. The small diameter portion 23 has a smaller diameter than that of the second step 22 and is formed continuously to an inclined portion 22a, and the mating ring 30 is inserted therein and a tip part of the lip seal 90 (the auxiliary seal) contacts the outer circumferential surface thereof. The lip seal 90 is fitted into and fixed to an annular recess 13 which is formed in expanded diameter in an opening, on the atmosphere side A, of the shaft hole 11 of the housing 1.

The lip seal 90 is mainly composed of a seal member 91, a metal ring 92, and a back-up ring 94. The seal member 91 and the back-up ring 94 are housed in and held by the metal ring 92 which is covered with a rubber member 93 by insert molding. The seal member 91 is formed of polytetrafluoroethylene (PTFE) as a main component.

By such a configuration, a biasing force by the spring 70 is given to the seal ring 40 in the axial direction of the rotating shaft 2, and the sliding surface 40a at a tip of the sliding protrusion 41 is pressed against the sliding surface 30a of the mating ring 30 under appropriate working pressure. Moreover, the seal ring 40 is given a rotating torque from the rotating shaft 2 via the case 60, and rotates integrally with the rotating shaft 2. As a result, along with the rotation of the rotating shaft 2, the sliding surface 30a of the mating ring 30 and the sliding surface 40a of the seal ring 40 slide in close contact state, and the refrigerant is sealed by sliding of the sliding surface 30a of the mating ring 30 and the sliding surface 40a of the seal ring 40.

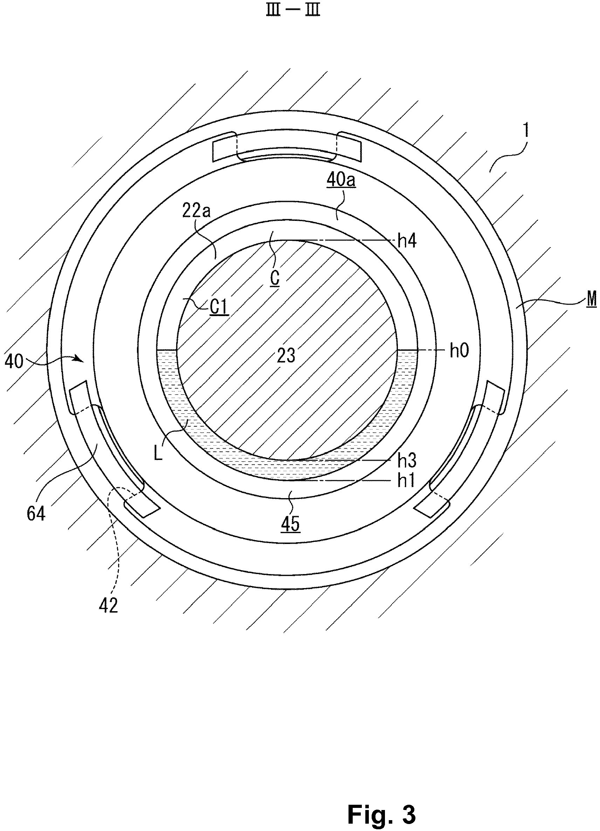

As shown in FIG. 1 and FIG. 3, the intermediate chamber C is a chamber provided in the space on the atmosphere side A, and is defined by the small diameter portion 23 of the rotating shaft 2, the inclined portion 22a of the rotating shaft 2, the inner circumferential surface of the seal ring 40, the inner circumferential surface of the mating ring 30, the inner circumferential surface of the gasket 50, the inner circumferential surface of the housing 1 between the mechanical seal 3 and the lip seal 90, and a side surface of the lip seal 90.

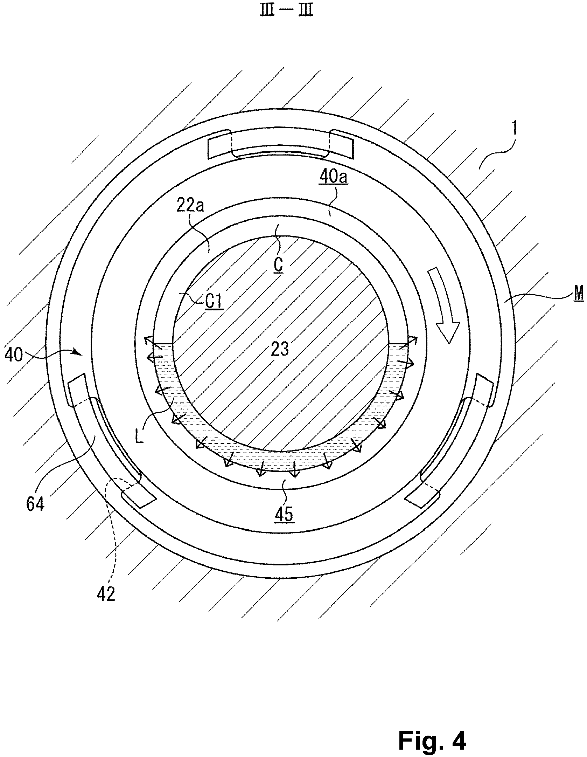

Then, since, in the intermediate chamber C, the refrigerator oil L is stored to a height position (a position shown by a dashed line h0 in FIG. 1 and FIG. 3) of an approximate lower half of the annular sliding surface 40a, the refrigerator oil L is supplied between the sliding surface 30a and the sliding surface 40a, and poor lubrication is prevented. The sliding surface 30a and the sliding surface 40a are mirror finished, and a gap between the sliding surface 30a and the sliding surface 40a (a gap between the sliding surfaces) is very small, therefore, as shown by arrows in FIG. 4, the refrigerator oil L in the intermediate chamber C is guided to the gap to the outer diameter side by capillary action. In this manner, it can be ensured that a lubricating film by the refrigerator oil L is interposed in the gap (the gap between the sliding surfaces). Then, after stoppage of the refrigerator compressor, the refrigerator oil is guided to the gap (the gap between the sliding surfaces) by a capillary action, and therefore it can be ensured that a lubricating film is interposed between the sliding surfaces. In particular, during start-up of the refrigerator compressor, even in a situation where the refrigerator oil between the sliding surfaces is decreased and poor lubrication tends to occur, the refrigerator oil is supplied to a part of the lower part of the gap (the gap between the sliding surfaces), and the refrigerator oil is guided upward sequentially in the circumferential direction along with rotation (a white arrow in FIG. 4) of the seal ring 40 and supplied to the entire sliding surfaces. Thus, the mechanical seal 3 can maintain fluid lubrication and is superior in durability.

In order to surely exhibit the aforementioned capillary action, it is preferable that the sliding surface 30a and the sliding surface 40a are respectively formed to have an arithmetic mean roughness Ra of 0.2µm or less, preferably 0.1µm or less, and thereby reducing the gap (the gap between the sliding surfaces).

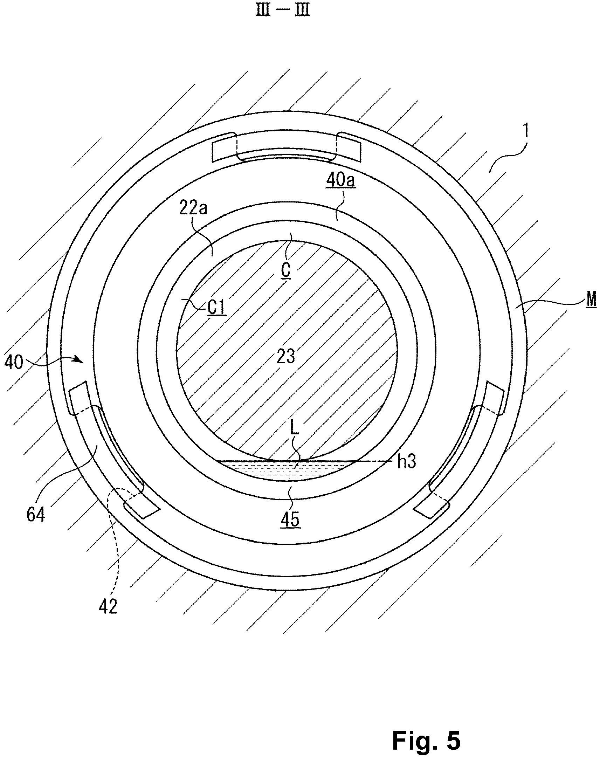

Moreover, in order to surely guide the refrigerator oil L to the gap, it is necessary that the refrigerator oil L is stored to a position higher than a position (a position shown by a dashed line h1 in FIG. 1 and FIG. 3) of a portion 45 of the sliding surface 40a which is located at the lowermost side in the intermediate chamber C. Preferably, the height to which the refrigerator oil L is stored may be a position higher than a portion (a position shown by a dashed line h2 in FIG. 1) located at the lowermost side of the inner circumferential surface of the mating ring 30, or a position almost higher than a portion (a position shown by a dashed line h3 in FIG. 1 and FIG. 3) located at the lowermost side of the outer circumferential surface of the small diameter portion 23 of the rotating shaft 2. That is, the refrigerator oil L needs to be stored to a height that reaches a part of the sliding surface 40a, and more specifically, needs to be stored to a height that reaches a part of an inner circumferential edge of a portion where the sliding surface 30a and the sliding surface 40a slidably contact. FIG. 5 shows a modification in which the height to which the refrigerator oil L is stored is a position (a position shown by a dashed line h3 in FIG. 3) at the lowermost side of the outer circumferential surface of the small diameter portion 23 of the rotating shaft 2.

Moreover, it is preferable that the refrigerator oil L is stored so as to leave a space C1 where the refrigerator oil L does not exist on the upper side in the intermediate chamber C, and by leaving the space C1 on the upper side in the intermediate chamber C, even if the refrigerator oil L expands due to temperature change, pressure of the intermediate chamber C does not excessively rise because the space C1 serves as a buffer. Therefore, pressure of the intermediate chamber C does not excessively rise, and differential pressure between the inside M of the mechanical seal 3 and the intermediate chamber C is not largely fluctuated, and thereby capable of successfully sealing without significantly losing pressure balance acting on the mechanical seal 3.

Moreover, the seal member 91 is formed of polytetrafluoroethylene (PTFE) as a main component, and has low friction property, heat resistance property, and refrigerant permeability. Since the seal member 91 is formed of a material allowing the refrigerant to permeate therethrough, the refrigerant which is leaked to the intermediate chamber C through the gap between the sliding surfaces 30a, 40a of the mechanical seal 3 can permeate to the atmosphere side A. Thereby, since fluctuation of pressure of the intermediate chamber C is reduced, differential pressure between the inside M of the mechanical seal 3 and the intermediate chamber C is not largely fluctuated, and thereby capable of successfully sealing without significantly losing pressure balance acting on the mechanical seal 3. Similarly, fluctuation of differential pressure between the intermediate chamber C and the atmosphere side A can be reduced.

The seal member 91 may be formed of a material which seals the refrigerator oil L and allows to the gaseous refrigerant as a main component to permeate therethrough, and in addition to polytetrafluoroethylene, nitrile rubber, hydrogenated nitrile rubber, fluorine-containing rubber, ethylene-propylene-diene rubber, acrylic rubber, silicone rubber, and the like can be used.

The height to which the refrigerator oil L is stored in the intermediate chamber C, in other words, the amount of the refrigerator oil L stored in the intermediate chamber C may be in a range satisfying the aforementioned condition of supplying the refrigerator oil L between the sliding surfaces and the aforementioned condition of leaving the space C1 on the upper side in the intermediate chamber C. Then, in a stationary state, it is preferable that the refrigerator oil L is stored to a height position (a position shown by the dashed line h3 or higher and a dashed line h4 or lower in FIG. 1 and FIG. 3) where the rotating shaft 2 at the portion that the seal member 91 contacts, that is, a part of the small diameter portion 23 contacts the refrigerator oil L. According to this, these conditions can be surely satisfied, control of injection amount of the refrigerator oil L is facilitated, and assembly of the shaft seal device 10 is easy.

Moreover, regardless of the kind of the auxiliary seal, since the lip seal 90 is adopted as the auxiliary seal, miniaturization is possible compared to the case of adopting the mechanical seal and the like. Moreover, the lip seal 90 is preferable if the seal member 91 is a so-called single seal because refrigerant permeability can be ensured.

Moreover, since the lip seal 90 is arranged on the atmosphere side A than the mechanical seal 3, the mechanical seal 3 serves as a main seal, and thereby shaft seal of the refrigerant of high pressure is ensured. Moreover, since the intermediate chamber C extends to the atmosphere side A, the refrigerator oil L in the intermediate chamber C is cooled from the atmosphere side A and contributes to the cooling of the mating ring 30 and the seal ring 40.

Moreover, since the mechanical seal 3 is an inside mechanical seal and the intermediate chamber C is defined by the inner circumferential surface of the mechanical seal 3 and the outer circumferential surface of the rotating shaft 2, the refrigerator oil L has a few portions in contact with the members on the rotating side, and rotating torque of the rotating shaft 2 is less affected.

Moreover, since the mechanical seal 3 is used, shaft seal of carbon dioxide which is the refrigerant of high pressure is ensured. Further, since the refrigerator oil L in the intermediate chamber C is supplied between the sliding surfaces even if the refrigerator oil L between the sliding surfaces is dissolved into the liquefied refrigerant, a lubricating film can be formed, and the mechanical seal 3 is superior in durability.

### {Second embodiment}

Hereinafter, a second embodiment of the present invention will be described. The second embodiment is mainly different from the first embodiment in a position where a lip seal 190 is provided. It should be noted that descriptions of the configuration similar to the first embodiment will be omitted.

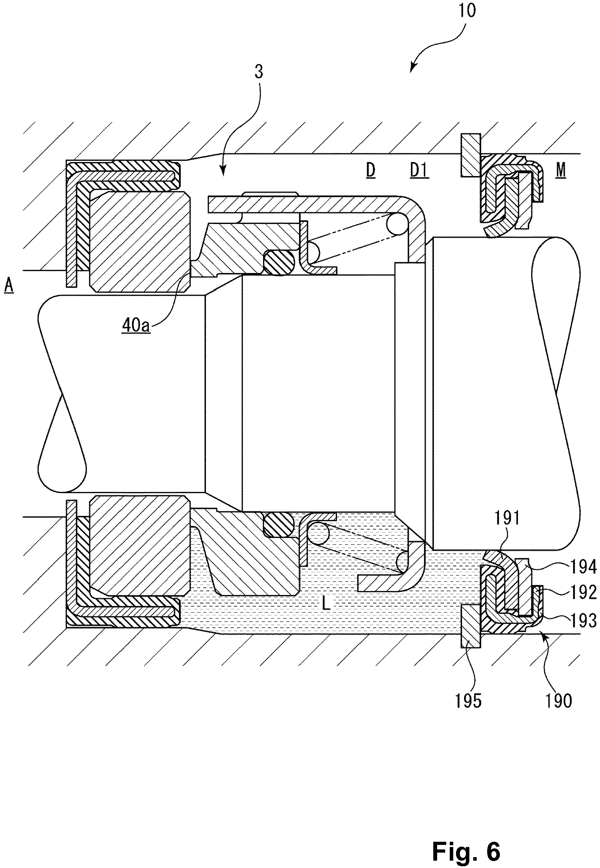

As shown in FIG. 6, in the shaft seal device 10 of the refrigerator compressor, the lip seal 190 (the auxiliary seal) is arranged on the inside M of the compressor than the mechanical seal 3. An intermediate chamber D between the lip seal 190 and the mechanical seal 3 is a chamber provided in the space on the inside M of the compressor, and, in the intermediate chamber D, the refrigerator oil L is stored to a height position of an approximate lower half of the annular sliding surface 40a so as to leave a space D1 on the upper side.

The lip seal 190 is mainly composed of a seal member 191, a back-up ring 194, and a metal ring 192. The seal member 191 and the back-up ring 194 are housed in and held by the metal ring 192 which is covered with a rubber member 193 by insert molding. The seal member 191 is formed of polytetrafluoroethylene (PTFE) as a main component. A tip part of the lip seal 190 contacts the outer circumferential surface of the large diameter portion 20 of the rotating shaft 2. Moreover, the lip seal 190 is fitted from the opening, on the inside M of the compressor, of the shaft hole 11 of the housing 1, and its axial position is restricted by a snap ring 195.

As thus configured, as with the first embodiment, since, in the intermediate chamber D, the refrigerator oil L is stored to a height position of an approximate lower half of the annular sliding surface 40a, the refrigerator oil L is supplied between the sliding surface 30a and the sliding surface 40a, and poor lubrication is prevented.

As above, the embodiments of the present invention have been described with reference to the drawings, but the specific configuration is not limited to these embodiments. The present invention also includes any changes or additions made within a scope that does not depart from the spirit of the present invention.

For example, the above-mentioned embodiments describe the case of the rotating mechanical seal 3, but it may be a stationary mechanical seal 3.

Moreover, the case where the refrigerator oil which is stored in the intermediate chambers C and D is same as the refrigerator oil sealed in the refrigeration cycle device is described as an example, but the kinds of the refrigerator oil may be different.

Moreover, the example where the mating ring 30 is formed of hard sliding material and the seal ring 40 is formed of carbon sliding material, is described, but any materials is possible. For example, both the mating ring 30 and the seal ring 40 may be formed of hard sliding material (for example, ceramics such as SiC).

### {REFERENCE SIGNS LIST}

- 1: Housing
- 2: Rotating shaft
- 3: Mechanical seal
- 10: Shaft seal device
- 30: Mating ring (Stationary sealing ring)
- 30a: Sliding surface
- 40: Seal ring (Rotating sealing ring)
- 40a: Sliding surface
- 50: Gasket
- 60: Case
- 90: Lip seal (Auxiliary seal)
- 91: Seal member
- 190: Lip seal (Auxiliary seal)
- 191: Seal member
- A: Atmosphere side
- M: Inside of the refrigerator compressor
- C, D: Intermediate chamber
- C1, D1: Space
- L: Refrigerator oil

## Claims

1. A shaft seal device of a refrigerator compressor which compresses a refrigerant, comprising:
a housing into which a rotating shaft of the refrigerator compressor is inserted;
a mechanical seal having a stationary sealing ring which is held by the housing, and a rotating sealing ring which is mounted to the rotating shaft and whose sliding surface slidably contacts a sliding surface of the stationary sealing ring;
an auxiliary seal which seals the rotating shaft; and
a refrigerator oil which is stored to a height that reaches at least a part of the sliding surfaces in an intermediate chamber which is formed between the mechanical seal and the auxiliary seal.

2. The shaft seal device of the refrigerator compressor according to claim 1, wherein the refrigerator oil is stored so as to leave a space on the upper side in the intermediate chamber.

3. The shaft seal device of the refrigerator compressor according to claim 1 or 2, wherein the auxiliary seal is formed of a material allowing the refrigerant to permeate therethrough.

4. The shaft seal device of the refrigerator compressor according to any of claims 1 to 3, wherein the auxiliary seal is a lip seal.

5. The shaft seal device of the refrigerator compressor according to claim 4, wherein the lip seal is arranged on the outside of the refrigerator compressor than the mechanical seal.

6. The shaft seal device of the refrigerator compressor according to any of claims 1 to 5, wherein the mechanical seal is an inside mechanical seal, and the intermediate chamber is defined by an inner circumferential surface of the mechanical seal and an outer circumferential surface of the rotating shaft.

7. The shaft seal device of the refrigerator compressor according to any of claims 1 to 6, wherein the refrigerant is carbon dioxide.

8. The shaft seal device of the refrigerator compressor according to any of claims 1 to 7, wherein the sliding surface of the rotating sealing ring and the sliding surface of the stationary sealing ring have an arithmetic mean roughness Ra of 0.2µm or less.
